Europäisches Patentamt

**European Patent Office**

Office européen des brevets

(19)

(11) Publication number: **0 110 547**
**A1**

# EUROPEAN PATENT APPLICATION

(12)

(21) Application number: **83306454.6**

(22) Date of filing: **25.10.83**

(51) Int. Cl.³: **B 65 G 47/10, B 65 G 1/04**

(30) Priority: **05.11.82 GB 8231701**

(43) Date of publication of application: **13.06.84**
**Bulletin 84/24**

(84) Designated Contracting States: **AT BE CH DE FR IT LI LU NL SE**

(71) Applicant: **PLESSEY OVERSEAS LIMITED, Vicarage Lane, Ilford Essex IGI 4AQ (GB)**

(72) Inventor: **Merrell, Brian John, 16 Mallard Road, Wimborne Dorset (GB)**

(74) Representative: **Hart, Robert John, Plessey Telecommunications Limited Edge Lane, Liverpool L7 9NW (GB)**

(54) Material handling and storage system.

(57) A materials handling and storage system which is used in an automated parts warehouse. Self-powered vehicles (1) route themselves around a tracking network (2) to storage racks (9) which consist of shelves, each shelf serving as a storage location where a tray (6) which accommodates parts is housed. The stack may be either rotated on a carousel basis (11) or the self-powered vehicle (1) may include a vertically and horizontally adjustable pick-up mechanism (5). By the provision of manually operated loading and picking stations (3) (4) in the network the handling of the parts in the warehouse can be fully under the control of the self-powered vehicles.

TITLE:  MATERIAL HANDLING AND STORAGE SYSTEM

The present invention relates to a materials handling and storage system.

The invention finds utility in a storage system such as a warehouse where items are required to be loaded into, and picked from, various parts of the storage area.

Conventionally, small items are loaded into boxes or trays on shelves by manual means, and sometimes with the aid of semi-automatic loading apparatus.  Items are also picked from the boxes or trays manually, although again sometimes with the aid of apparatus which assists in location of the items.

The concept of "station picking" i.e. an operator stays stationary while the items are brought to the operator, is not new, but this concept is very limited in its application.

Where there is a small number of different items held in a store, a number of each kind of item can be held on a moving belt, or carousel, which then presents all items, in sequence, to the operator.

These beforementioned arrangements are not economic for large stores and waste time as the "picker" is inevitably presented with items that are not required before those that are.

An aim of this invention is to provide a materials handling and storage system which facilitates station picking from a large store and/or station loading, so that there are no manual operations within the storage area.

According to the present invention there is provided a materials handling and storage system comprising, a material storage means including a plurality of storage locations in which items of material are capable of being stored, a tracking network for gaining access to said material storage means and including a plurality of programmable self-powered vehicles which co-operate with said tracking network, and storage location selection means co-operable with said vehicle to gain access to particular storage locations, wherein when one of said plurality of self-powered vehicles is programmed with data relating to one particular storage location within said material storage means, said one vehicle is driven automatically through said tracking network to said material storage means and said storage location selection means is enabled for gaining access to said one particular storage location.

In one embodiment of this invention, the storage location selection means comprises a mechanism on the vehicle which is controllable to gain access to said one particular storage location.

In another embodiment of this invention, the storage location selection means is a co-operable two-part mechanism between the vehicle and the storage means, both parts of the mechanism being controllable in combination to gain access to said particular storage location.

The invention will be better understood from the following description of two exemplary embodiments which should be read in conjunction with the accompanying drawings in which,

Fig 1 shows a tracking network in accordance with this invention;

Fig 2 shows one embodiment in accordance with this invention; and,

Fig 3 shows another embodiment in accordance with this invention.

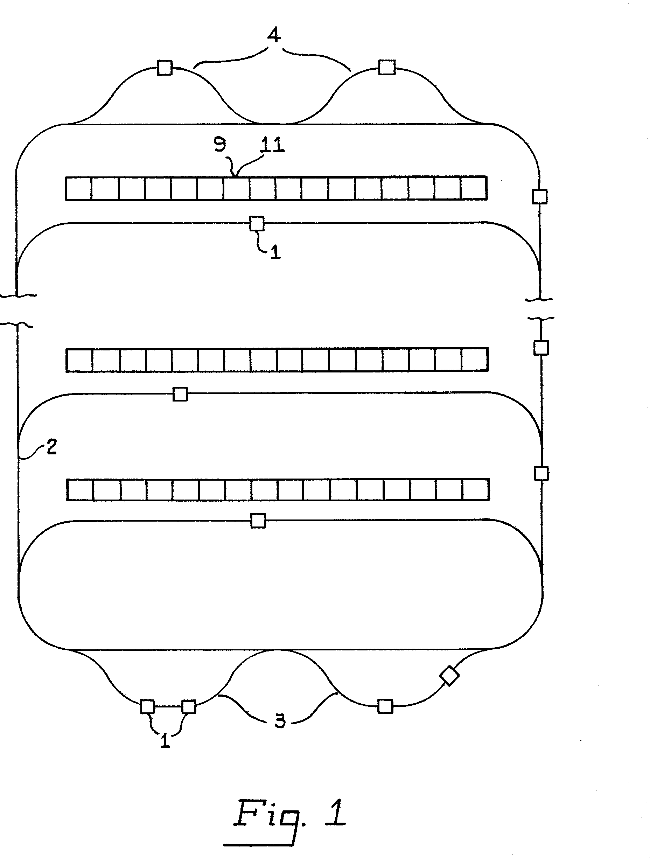

Referring to the drawings, in one form of this invention, the system consists of a number of self-powered vehicles 1 co-operating with a tracking network 2 as shown in Fig 1. The network 2 includes loading sidings 3 provided to enable items of material to be loaded into trays, and picking sidings 4 to enable items of material to be picked from the trays.

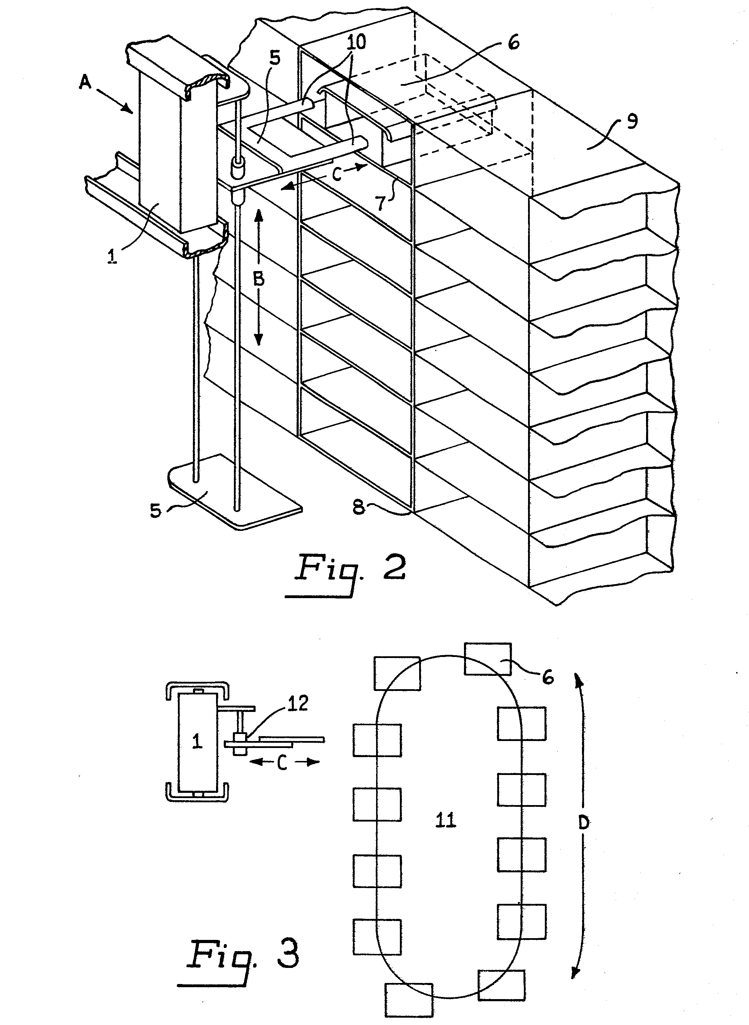

The self-powered vehicles 1 are similar to those disclosed in our copending application no. 8223820 and operate within the network 2 in the manner described in this application. However, whereas the vehicles disclosed in that application contain a compartment or pocket for containing a packet, the vehicles of this system, instead of the compartment, have a storage location selection means 5 in the form of a mechanism for loading, or unloading a removable materials recepticle, or tray 6 containing items of material, such as parts, on to a particular shelf 7, or storage location in a column of shelves 8 in a suite of racks 9 which form part of a materials storage area. The mechanism 5 (Fig 2) incorporates a pair of pick-up arms 10 which are adapted for movement in a vertical direction as illustrated by arrow B and in a horizontal direction as illustrated by arrow C. The sequences of loading and unloading are as follows:-

During the loading sequence the loading operator keys-in successively to electronic circuitry on the vehicles, the part numbers of the parts to be stored. The programmed empty vehicles are then despatched automatically around the tracking network (see Fig 1 and Fig 2; direction of vehicle indicated by arrow A) to the appropriate storage locations to remove the relevant tray, which may already contain some parts, and take the tray to the loading area. The loading operator is then presented with a succession of part full or part empty trays identified by part numbers.

Each of these trays is then loaded with the parts to be stored whereupon the vehicle is released to return automatically, with the tray, to the original location in the store where it is replaced on the shelf.

The unloading or "picking" sequence is similar to the loading sequence except that at the "picking" station (which is arranged similarly to the loading station), parts are taken out of the selected trays, instead of being placed in them.

The advantages of such a system are:-

a)    Lower floor space, since the storage area is not manned.

b)    Lower manning levels.

c)    Less costs of equipment compared with other known systems.

In another embodiment of this invention (Fig 3) individual racks containing the trays are arranged to rotate (see arrow D) in the manner of a carousel 11, in a vertical direction. The rotation of the rack is computer controlled so that the selected tray 6, stops at the same level as the programmed vehicle when it arrives at the particular storage location. The vehicle then picks-up the tray 6, by a movement of the mechanism 12, on the vehicle in a horizontal direction, as illustrated by arrow C, simply and quickly. This arrangement of a storage location selection means is effectively a two-part mechanism one part being located on the vehicle 1, and the other on the storage means 11. The two parts co-operate with each other, when appropriately controlled, to gain access to particular areas of the storage means.

Further advantages which accrue with this embodiment are:-

e)    Reduced time to pick-up or deposit a tray, therefore, fewer trays are needed for any given system.

f)    The picking or storage location selecting mechanism is much simpler in construction.

It is possible to dynamically tune the location of parts in the store so that those most frequently selected are closest to the picking positions.

It will be apparent to those skilled in the art that such a system as has been disclosed herein can be used to facilitate perpetual inventory counting.

CLAIMS:-

1. A materials handling and storage system comprising, a material storage means including a plurality of storage locations in which items of material are capable of being stored, a tracking network for gaining access to said material storage means and including a plurality of programmable self-powered vehicles which cooperate with said tracking network, and storage location selection means cooperable with said vehicle to gain access to particular storage locations, wherein when one of said plurality of self-powered vehicles is programmed with data relating to one particular storage location within said material storage means, said one vehicle is driven automatically through said tracking network to said material storage means and said storage location selection means is enabled for gaining access to said one particular storage location.

2. A materials handling and storage system as claimed in claim 1, in which the storage location selection means comprises a mechanism on the vehicle.

3. A materials handling and storage system as claimed in claim 2, in which said mechanism incorporates a pair of pick-up arms which are adapted for movement in a vertical direction and in a horizontal direction with respect to the material storage means to gain access to said one particular storage location.

4. A materials handling and storage system as claimed in claim 1, in which the storage location selection means is a co-operable two-part mechanism being controllable in combination to gain access to said one particular storage location.

5. A materials handling and storage system as claimed in claim 4, in which the two part mechanism comprises a pair of pick-up arms on the vehicle which are adapted for movement in a horizontal direction with respect to the material storage means and an arrangement whereby the storage locations are arranged to rotate in the manner of a carousel under the control of a computer progammed so that a selected storage location stops at the same level as the programmed vehicle when it arrives at the particular storage location.

6. A materials handling and storage system as claimed in any one of the preceding claims in which the material storage means is a suite of racks forming a materials storage area, each rack incorporating a column of shelves, and each shelf forming a storage location and including a removable materials recepticle.

7. A materials handling and storage system as claimed in claim 6, in which the removable recepticle is a tray which is transported by said vehicle to either, a loading siding where items of material are loaded into the tray, or a "picking" siding where items of material are unloaded from the tray.

Fig. 1

0110547

Fig. 2

Fig. 3

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| P,X | EP-A-0 082 327 (KÖTTGEN GMBH & CO. KG.) * Whole document * | 1-3,6, 7 | B 65 G 47/10 B 65 G 1/04 |
| X | DE-A-2 114 705 (CRISPLANT A/S) * Page 5, lines 1-20; page 6, lines 12-20 * | 1,2 | |
| X | GB-A-1 213 229 (STANDARD ALLIANCE INDUSTRIES INC.) * Page 13, lines 29-69 * | 1 | |
| A | US-A-1 927 677 (BENNINGTON) * Page 1, line 84 - page 2, line 10; figures 1, 2 * | 1 | |
| A | DE-B-1 208 250 (TRIANGEL SPANPLATTENWERKE DER NIEDERSACHSEN) * Column 3, lines 61-64; figure 5a * | 5 | TECHNICAL FIELDS SEARCHED (Int. Cl. ³) B 65 G 1/00 B 65 G 37/00 B 65 G 47/00 |
| A | CH-A- 425 635 (A. & R. WIEDEMAR) | | |
| A | DE-A-3 100 020 (F. SCHULZE & CO.) | | |

The present search report has been drawn up for all claims

| Place of search BERLIN | Date of completion of the search 30-01-1984 | Examiner SIMON J J P |
|---|---|---|